# EUROPÄISCHE PATENTANMELDUNG

(11) **EP 0 565 036 A2**
(43) Veröffentlichungstag der Anmeldung: **13.10.1993**
(21) Anmeldenummer: 93105626.1
(22) Anmeldetag: 05.04.1993
(51) Int. Cl.: H04M 11/10, H04M 11/00, H04M 1/64

(54) **System zur automatischen Fernabfrage und/oder zum automatischen Senden eines auf Band gesprochenen Textes über das Telefon**

(30) Priorität: 04.04.1992 DE 4211369
(71) Anmelder: TOM COMMUNICATION DEUTSCHLAND GmbH, D-82058 Neuried (DE)
(72) Erfinder: Bell, Alexander, W-8000 München 70 (DE)
(74) Vertreter: Hafner, Dieter, Dr.rer.nat., Dipl.-Phys.

(57) **Zusammenfassung**

Die Erfindung betrifft ein System zur automatischen Fernabfrage eines auf Band gesprochenen Textes von dem Band eines Abspielgerätes, d.h. Anrufbeantworter eines ortsentfernten Kommunikationspartners, wobei das System 1 ein Aufnahmegerät 2, einen Rechner 3 mit Speicher 8 sowie ein Modem 4 für das Telefonnetz 7 aufweist und der Anrufbeantworter 30 des Kommunikationspartners zunächst insbesondere automatisch angewählt und anschließend über den Rechner 3 und das Modem 4 unter Verwendung eines codierten Impulses in Ton-Form über das Telefonnetz 7 aktiviert wird, daß ein Rücklaufimpuls des Anrufbeantworters 30 ausgelöst wird und daß der Anrufbeantworter 30 anschließend einen in letzterem abgelegten Text abspielt und das Modem 4 vor Wiedergabe des Textes das Aufnahmegerät 2 des Systems 1 aktiviert, so daß dieses den über die Telefonleitung übermittelten Text aufzeichen kann.

## Beschreibung

Die vorliegende Erfindung betrifft ein System zur automatischen Fernabfrage und/oder zum automatischen Senden eines auf Band gesprochenen Textes bzw. zu einem Anrufbeantworter eines ortsentfernten Kommunikationspartners.

Bei schreibintensiven Dienstleistungsbereichen (Anwaltsbü-(ros, beratende Ingenieure, Wirtschaftsprüfer, etc.) geht ein hoher Kostenfaktor auf fest angestellte Schreibkräfte. Neben dem Grundgehalt einer Schreibkraft sind als weitere Kosten anzusetzen: Sozialleistungen, 13. Monatsgehalt, Urlaubsgeld, Kosten für Vertretung im Krankheitsfall, Fahr- sowie Essengeld. Schreibkräfte sind darüber hinaus einem hohen Streßfaktor ausgesetzt, mit der Folge, daß ein erhöhtes Risiko an Kranktagen besteht, für welche Aushilfskräfte gesucht und angelernt werden müssen. Zwar existieren bereits Schreibbüros, die ersatzweise für ausgefallene Schreibkräfte einspringen, wobei dann aber regelmäßig die Diktatbänder entweder per Post, per Eilboten oder aber selbst transportiert werden müssen, was viel zu teuer ist.

Die Aufgabe der vorliegenden Erfindung besteht darin, in einem Dienstleistungsbereich anfallende Schreibarbeiten ohne Verwendung von Boten oder sonstigen Transportmitteln in einfacher Weise und automatisch einem ortsentfernten Kooperationspartner zu übermitteln.

Diese Aufgabe wird bei dem eingangs erwähnten System dadurch gelöst, daß das System ein Aufnahmegerät, einen Rechner mit Speicher sowie ein Modem für das Telefonnetz aufweist, wobei der Anrufbeantworter des Kommunikationspartners zunächst, insbesondere automatisch, angewählt und über den Rechner und das Modem unter Verwendung eines codierten Impulses in Ton-Form über das Telefonnetz aktiviert wird, daß ein Rücklaufimpuls des Anrufbeantworters ausgelöst wird und daß der Anrufbeantworter anschließend einen in letzterem abgelegten Text abspielt und das Modem vor Wiedergabe des Textes das Aufnahmegerät des Systems aktiviert, so daß dieses den über die Telefonleitung übermittelten Text aufzeichnen kann.

Zweckmäßigerweise ist hierbei jedem Kommunikationspartners (im Sinne eines Auftragnehmers von Schreibaufträgen) ein separater, codierter Impuls zugeordnet.

Das System besitzt den Vorteil, daß ein Diktatband an den ortsentfernten Kommunikations-, d.h. Kooperationspartner nicht übermittelt zu werden braucht. Damit entfällt auch die Anfertigung einer Sicherheitskopie beim Auftraggeber desselben. Aufwendige und teuere Verwaltungsmaßnahmen erübrigen sich. Die Organisation des Beauftragten braucht nicht unter der Kontrolle des Auftraggebers stehen. Unordnung und Desorganisation beim Ersteren kann nicht zu Verlust von wichtigen Unterlagen führen. Der Zeitaufwand für den Austausch des auf das Diktatband gesprochenen Textes ist vergleichsweise gering. Die Erfindung gewährleistet die "Auslagerung" von Schreibarbeitsplätzen mit all den damit verbundenen Vorteilen, wie etwa Einsparung von Bürofläche, überschaubare Kostenkalkulation sowie erheblich größerer Flexibilität bei schwankendem Arbeitsanfall. Die Unteransprüche betreffen zweckmäßige Ausgestaltungen des erfindungsgemäßen Systems nach Anspruch 1.

Um den jeweiligen Anrufbeantworter des gewünschten Kommunikationspartners über einen codierten Impuls in Ton-Form aktivieren zu können, weist das System einen Tonimpulsgeber auf, welcher entweder vom Rechner oder direkt vom Modern angesteuert wird. So können beispielsweise 3-stellige Tonimpulse verschiedenen Kommunikationspartner zugeordnet werden.

Zweckmäßigerweise ist der Tonimpulsgeber Bestandteil des Modems.

Zuvor erfolgt das Anwählen, Aktivieren sowie Rückspulen des Anrufbeantworters über die Telefonleitung. Anschließend wird über das Modern eine systemseitige Schaltung aktiviert, die das Abspielgerät in die dann bereits hergestellte Telefonverbindung schaltet und somit eine Verbindung zwischen Anrufbeantworter und Aufnahmegerät herstellt.

Die Unteransprüche 5 und 6 beschreiben einfache konstruktive Ausgestaltungen der Erfindung, die systemseitige Schaltung zu aktivieren und eine Verbindung zwischen Anrufbeantworter und Aufnahmegerät herzustellen.

Bei der in Anspruch 6 beschriebenen benutzerbezogenen Rufschaltung handelt es sich um eine herkömmliche Schaltung, wie sie zur Schaltung zweier Telefonapparate verwendet wird, die an einem einzigen Anschluß hängen.

Zur Erzielung des Rückspulvorgangs des Anrufbeantworters kann dieser gemäß Ausgestaltung nach Anspruch 7 selbst eine Schaltung aufweisen, die bei Aktivierung des Anrufbeantworters automatisch den Rückspulvorgang auslöst.

Sollten jedoch Eingriffsmöglichkeiten seitens des Kommunikationspartners hinsichtlich des Rückspulvorgangs bestehen, bietet sich - wie in Anspruch 8 dargelegt - an, daß der Rechner über das Modem ein codiertes Signal in Ton-Form an den angerufenen, aktivierten Anrufbeantworter zur Auslösung des Rückspulvorgangs sendet.

Zur Freischaltung der Amtsleitung wird zweckmäßigerweise gemäß Anspruch 9 der Stopimpuls vorn Anrufbeantworter nach Beendigung des Rückspulvorgangs desselben ausgenutzt. Dieser Stopimpuls wird vom Modern empfangen , woraufhin das Modern die systemseitige Schaltung aktiviert und gleichzeitig die Amtsleitung freischaltet.

Für die Einheit Rechner und Speicher läßt sich zweckmäßigerweise auch eine sogenannte speicherprogrammierbare Schaltung verwenden.

Zur automatischen Programmierung des Abfragens zu einer bestimmten Tageszeit weist das System zweckmäßigerweise eine Zeitschaltuhr auf.

Der Abspielvorgang geht insofern vonstatten, als das Modem einen Impuls in Ton-Form als Signal für den Beginn desselben an den Anrufbeantworter sendet.

Nach Beendigung der Aufzeichnung des Textes durch das Aufnahmegerät wird vom Anrufbeantworter ein ebenfalls in Tonform übertragener Abschaltimpuls an das Modem übertragen, woraufhin das System abschaltet.

Auf seiten des Anrufbeantworters, dessen Text abgefragt werden soll, kann zweckmäßigerweise ein Rechner oder PC vorhanden sein, in den der aufgezeichnete Text eingeschrieben werden kann. Der systemseitige Rechner steht zweckmäßigerweise mit dem PC des Kommunikationspartners über ein Datenfernübertragungsmittel in Verbindung. Hierdurch können die automatisch aufgezeichneten Texte sogleich in den PC eingeschrieben werden und der geschriebene Text wird per Datenfernübertragung dem Auftraggeber zur Verfügung gestellt werden. Unter das Wort Datenfernübertragung fallen Einrichtungen wie ISDN oder DATEX-P.

Der Gegenstand des Anspruchs 16 betrifft - als nebengeordneter Anspruch - ein System zur automatischen Fernabfrage und/oder zum automatischen Senden eines auf Band gesprochenen Textes von bzw. zu einem Anrufbeantworter eines ortsentfernten Kommunikationspartners über das Telefonnetz, welches die Möglichkeit bieten soll, ohne Verwendung eines herkömmlichen Modems eine Fernübertragung von gesprochenem Texten zu ermöglichen.

Hierzu ist eine mit dem Telefonnetz verbundene Anwahl- und Steuereinrichtung vorgesehen, die die Verbindung zum Kommunikationspartner nach Vorgabe dessen Rufnummer herstellt. Für den Fall, daß der im Anrufbeantworter des jeweiligen Kommunikationspartners abgelegte Text überspielt werden soll, ist vorgesehen, daß nach Herstellung der Telefonverbindung mit dem zugehörigen Kommunikationspartner eine Fernsteuerung des Anrufbeantworters des Kommunikationspartners über von der Anwahl- und Steuereinrichtung ausgehende Tonimpulse im Tonwahlverfahren erfolgt. Die Fernsteuerung erfolgt damit ausschließlich über Tonimpulse, ohne daß ein Modem eingesetzt werden muß.

Der jeweilige Anrufbeantworter des Kommunikationspartners kann hierbei herkömmlicher Bauart sein, er muß lediglich mit einer zusätzlichen Tonzeichenerkennung und Zusatzsteuerung ausgestattet sein, was als Zusatzgerät zu einem herkömmlichen Anrufbeantworter vorgesehen sein kann.

Alternativ oder kumulativ besteht daneben auch die Möglichkeit, die Anwahl- und Steuereinrichtung so auszugestalten, daß anstelle von oder zusätzlich zur Übertragung eines gesprochenen Textes in der vorstehend beschriebenen Art die Anwahl- und Steuereinrichtung unter Ausnutzung des Signaltons des Anrufbeantworters des Kommunikationspartners als Steuerton einen im Bereich der Anwahl- und Steuereinrichtung auf Band gesprochenen Text auf den Anrufbeantworter des Kommunikationspartners übertragen werden kann. Diese Möglichkeit ist insofern von zusätzlichem Vorteil, als der Anrufbeantworter des Kommunikationspartners herkömmlicher Art sein kann und keine Zusatzgeräte benötigt werden.

Das erfindungsgemäße System hat den Vorteil, daß eine Vielzahl gesprochener Texte automatisch, d.h. insbesondere nach Dienstschluß bei reduzierten Telefongebühren in beliebig vorgebbarer Weise übertragen werden können, was die Effektivität im Kommunikationsbereich wesentlich erhöht.

Darüber hinaus ist zur Übertragung der gesprochenen Texte nur eine Telefonverbindung notwendig, Modembetrieb, Datex-P-Anschluß und dgl. entfallen. Eine Rückübertragung des bereits geschriebenen Textes per Datenfernübertragung (z.B. Datex-P, ISDN etc.) ist zwar möglich aber nicht unbedingt Voraussetzung für einen reibungslosen Betrieb. Geschriebene Texte können in einfacher Weise auch auf andere Art übertragen werden (Telefax, Post und dgl.). Der Vorteil des erfindungsgemäßen Systems liegt in seiner breiten Anwendbarkeit bei vergleichsweise niedrigen Kosten.

Zweckmäßigerweise ist das System gemäß Anspruch 16 der Gestalt ausgebildet, daß sowohl die Möglichkeit eines automatischen Empfangs von gesprochenen Texten (Merkmal (i)) als auch eines automatischen Senden von gesprochenen Texten (Merkmal (ii)) ermöglicht wird.

Eine Rufzeichenerkennung der Anwahl- und Steuereinheit sorgt für eine Abschaltung, sofern der angewählte Telefonanschluß belegt oder anderweitig nicht anwählbar ist.

Die vorliegende Erfindung betrifft darüber hinaus ein Verfahren zur automatischen Fernabfrage eines auf Band gesprochenes Textes von dem Band eines Abspielgerätes, d.h. Anrufbeantworter eines ortsentfernten Kommunikationspartners.

Dieses Verfahren ist gekennzeichnet durch folgende Verfahrensschritte:
a) der Anrufbeantworter des ortsentfernten Kommunikationspartners wird über das Telefonnetz in herkömmlicher Weise angewählt;
b) der angewählte Anrufbeantworter wird von der Anwahl- und Steuereinrichtung unter Verwendung eines Codes in Ton-Form aktiviert;
c) es wird über einen Tonimpuls der Rückspulvorgang beim angewählten Anrufbeantworter ausgelöst;
d) ein systemseitiges Aufzeichnungs- und Wiedergabegerät wird anschließend in das Telefonnetz eingeschaltet, so daß eine Telefonverbindung zwischen Aufzeichnungs- und Wiedergabegerät sowie Anrufbeantworter besteht;
e) das Aufzeichnungs- und Wiedergabegerät zeichnet den im Anrufbeantworter abgespielten Text auf;
f) die Anwahl- und Steuereinrichtung des Systems schaltet das System nach Aufzeichnung mittels Tonimpuls ab:
Ferner betrifft die Erfindung alternativ oder kumulativ ein Verfahren zum automatischen Senden eines auf Band gesprochenen Textes von einem systemseitigen Aufzeichnungs- und Wiedergabegerät auf ein Band eines Anrufbeantworters eines ortsentfernten Kommunikationspartners, welche gekennzeichnet ist durch folgende Merkmale:
a) der Anrufbeantworter des ortsentfernten Kommunikationspartners wird über das Telefonnetz in herkömmlicher Weise angewählt;
b) der angewählte Anrufbeantworter wird von der Anwahl- und Steuereinrichtung unter Verwendung eines Codes in Ton-Form aktiviert;
c) der Signalton des Anrufbeantworters wird über die Anwahl- und Steuereinrichtung erfaßt und
d) das systemseitige Aufzeichnungs- und Wiedergabegerät wird anschließend in das Telefonnetz eingeschaltet und der darauf aufgezeichnete gesprochene Text übertragen.

Für die Ausgestaltung des Systems zur Gewährleistung eines automatischen Sendens besitzt die Anwahl- und Steuereinrichtung eine Tonzeichenerkennung, die gewährleistet, daß der Signalton des Anrufbeantworters zur Aktivierung des Aufnahme- und Wiedergabegeräts , d.h. als Steuerton verwendet werden kann.

Zweckmäßige Ausgestaltungen der Erfindung werden anhand der Zeichnunsgfiguren nachstehend näher erläutert. Es zeigen:

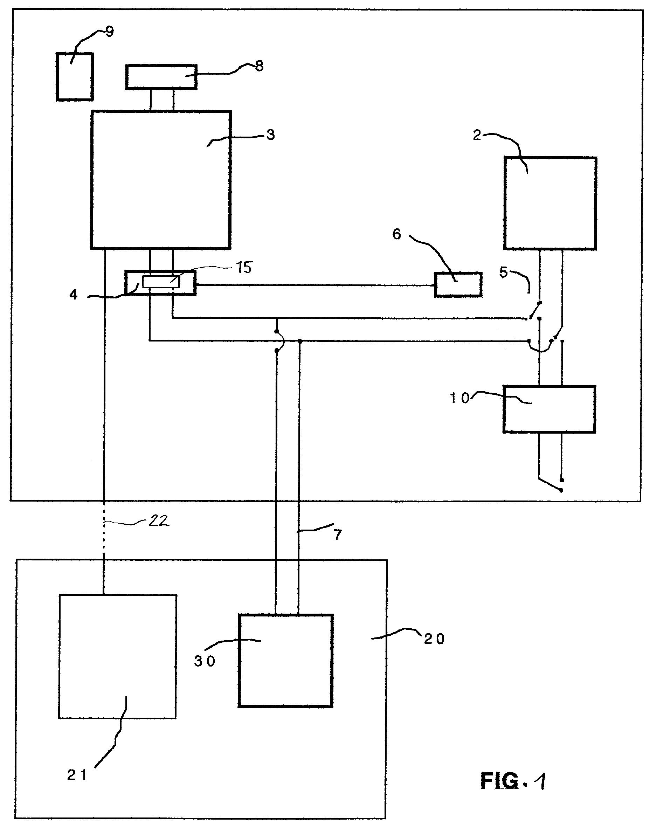

- Fig. 1: eine stark, vereinfachte schematische Darstellungsweise einer Ausgestaltung des erfindungsgemäßen Systems unter Verwenddung eines Modems zur Übertragung eines gesprochenen Textes auf den Anrufbeantworter eines ortsentfernten Kommunikationspartner;
- Fig. 2: eine anderweitige Ausgestaltung des erfindungsgemäßen Systems ohne Modem unter Verwendung einer Anwahl- und Steuereinrichtung sowie
- Fig. 3: eine schematische Darstellung der Hauptbestandteile der Anwahl- und Steuereinrichtung gemäß Fig. 2
Bezugsziffer 1 bezeichnet das System zur automatischen Fernabfrage eines auf Band gesprochenen Textes von dem Band eines Abspielgerätes, d.h. Anrufbeantworters eines ortsentfernten Kommunikationspartners in seiner Gesamtheit.

Das System 1 umfaßt einen programmierbaren Rechner 3, welcher einen Speicher 8 sowie eine Zeitschaltuhr 9 aufweist. Der Rechner steht mit einem Modern 4 in Verbindung, welches wiederum verbunden ist mit der Telefonleitung, d.h. dem Telefonnetz 7. Das Modern 4 beinhaltet einen Tonimpulsgeber 15 zur Erzeugung bspw. 3-stelliger Tonimpulse zur Zuordnung der jeweils gewünschten Kommunikationspartner.

Das System umfaßt weiterhin ein Aufnahmegerät 2, z.B. ein Tonbandgerät, Diktiergerät; Kassettenrecorder oder dgl.

Ferner ist eine Schaltung 5 vorgesehen, welche insgesamt zwei Schalter aufweist, die das Aufnahmegerät 2 entweder mit dem Telefonnetz 7 oder mit einer Ruf- und Signaleinheit 10 verbinden.

Bezugsziffer 20 kennzeichnet den Systembereich beim Kommunikationspartner, welcher z.B. der Arbeitgeber ist, der einen Text auf den mit 30 beschriebenen Anrufbeantworter diktiert hat und wünscht, daß dieser Text extern von einer dazu bestimmten mit dem System 1 ausgestatteten Person geschrieben wird.

Neben dem Anrufbeantworter 30 umfaßt der Bereich des Kommunikationspartners 20 noch darüber hinaus einen PC (Personalcomputer) 21, welcher über eine Datenfernübertragungsleitung (z.B. ISDN) 22 mit dem Rechner 3 beim Kommunikationspartner in Verbindung steht.

Zum Funktionsablauf des Systems:
Im Anrufbeantworter 30 des Bereichs 20 ist ein Text aufgezeichnet, welcher außerhalb des Bereiches 20, d.h. an einer ortsentfernten Stelle geschrieben werden soll.

Die externe Schreibkraft, die ein derartiges System 1 installiert hat, gibt über die Zeitschaltuhr 9 eine bestimmte Zeit ein, zu der die Abfrage des Anrufbeantworters 30 zu erfolgen hat und wählt den betreffenden Kommunikationspartner aus.

Das System 1 schaltet zur vorbestimmten Zeit ein, woraufhin sich das Modern 4 in die Amtsleitung einschaltet. Das Modem 4 registriert die Amtsleitung durch den besonderen Ton der Amtsleitung. Anschließend wählt der Rechner 3 über das Modern 4 unter Verwendung einer im Speicher 8 abgelegten Nummer den Anrufbeantworter 30 an.

Der Anrufbeantworter 30 des Kommunikationspartners schaltet sich ein.

Anschließend sendet das Modern 4 in Verbindung mit dem Tonimpulsgeber einen vorprogrammierten codierten Impuls in Ton-Form, welcher vorn Anrufbeantworter 30 registriert wird. Wird ein falscher Code verwendet, schaltet der Anrufbeantworter 30 ab. Damit ist eine eindeutige Zuordnung möglich und ein sicherer Zugriff durch den Kooperationspartner gewährleistet.

Daraufhin sendet das Modern 4 einen Impuls ebenfalls in Ton-Form für das Abspielband des Anrufbeantworters 30. Der Anrufbeantworter 30 spult dann zurück und stoppt am Anfang.

Der Anrufbeantworter 30 sendet dann einen Stop-Impuls an das Modern 4, woraufhin letzteres das Relais 6 aktiviert und dieses ca. 10 sec aktiv hält. Das Relais 6 aktiviert die Ruf- und Signaleinheit 10, welche die Schaltung 5 dahingehend ändert, daß der Anrufbeantworter 30 über das Telefonnetz 7 mit dem Aufnahmegerät 2 in Verbindung steht, wodurch die Amtsleitung vom Modem 4 freigeschaltet wird.

Diese Durchschaltung erfolgt zeitverzögert (z.B. 10 sec), da das Ansageband des Anrufbeantworters 30 eine Laufzeit von etwa 10 sec besitzt. Sobald das Aufnahmegerät in das Telefonnetz eingeschaltet ist, schaltet dieses auf Aufnahme und nimmt den vom Anrufbeantworter 30 abgespielten Text auf. Am Ende des aufzunehmenden Textes stoppt der Anrufbeantworter 30 und sendet einen Abschaltimpuls an das Modern 4 des Systems 1, woraufhin dieses abschaltet.

Das im Aufnahmegerät 2 aufgezeichnete Diktat kann anschließend in den Rechner 3 oder in einen PC geschrieben werden. Zweckmäßigerweise steht der Rechner 3 mit einem Rechner bzw. PC 21 beim Kommunikationspartner über Datenfernübertragung in Verbindung, wodurch die geschriebenen Texte direkt auf den Speicher des PC 21 des Kommunikationspartners, insbesondere des Arbeitgebers geschrieben werden können.

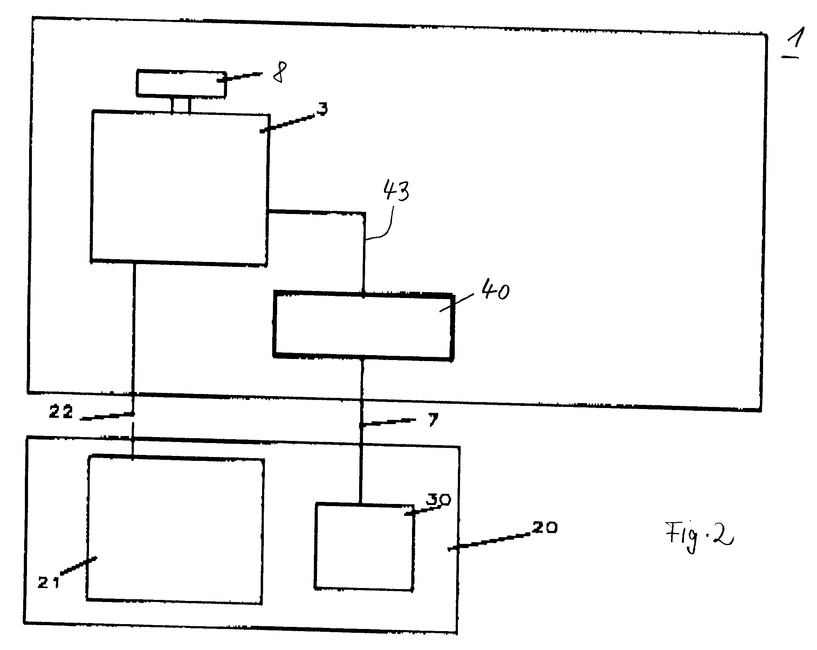

Fig. 2 zeigt eine andersartige Ausgestaltung des erfindungsgemäßen Systems zur Fernübertragung von gesprochenen Texten, bei dem das Modem 4, das Relais 6, die Ruf- und Signalmaschine 10 ersetzt werden durch eine Anwahl- und Steuereinrichtung 40, welche über eine Datenverbindung 43 unter Einsatz einer geeigneten, nicht dargestellten Schnittstelle mit dem Rechner 3 in Verbindung steht. Die Anwahl- und Steuereinrichtung 40 ermöglicht es, entweder im Anrufbeantworter 30 eines des ortsentfernten Kommunikationspartners 20 abgelegte Text zur Anwahl- und Steuereinrichtung 40 zu überspielen oder im Bereich des Systems 1 abgelegte Text zu dem Anrufbeantworter 30 des Kommunikationspartners 20 zu senden.

Vorzugsweise können gemäß einer besonderen Ausgestaltung der Anwahl- und Steuereinrichtung 40 auch beide Möglichkeiten gewährleistet sein.

Die gesprochenen Texte werden entweder im Bereich des Sytems 1 oder des Kommunikationspartners 20 geschrieben und über Datenfernübertragung jeweils rückübertragen.

Mit dem Rechner 3 kann die automatische Fernübertragung von gesprochenen Texten in der Weise erfolgen, daß vorgegeben werden kann, mehreren Kommunikationspartnern zu bestimmten Zeiten unterschiedliche Texte automatisch zu übermitteln bzw. entsprechende Texte dort abzuspielen und zu übertragen.

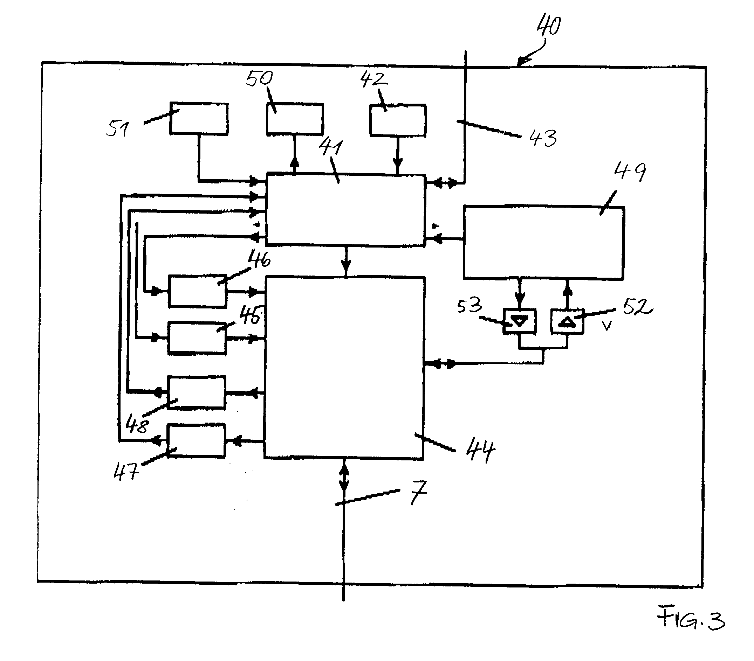

Anwahl- und Steuereinrichtung 40 umfaßt gemäß Fig. 3 einen Mikroprozessor 41, welcher entweder mit einem eigenen Eingabegerät 42 sowie ggf. mit entsprechender Anzeige 50 oder mit einer Datenverbindung unter Verwendung einer entsprechenden, nicht dargestellten Schnittstelle mit einem Rechner in Verbindung steht. Daneben ist eine Schaltung 44 zur Auswahl des Wählverfahrens mit dem Mikroprozessor 41 sowie der Telefonleitung 7 verbunden.

Mit dem Mikroprozessor 41 verbunden ist weiterhin eine Echtzeituhr 51 zur Ermöglichung zeitlich aktivierter Vorgänge.

Je nach vorhandenem Telefonsystem (Puls- oder Tonwahl) steht der Mikroprozessor 41 mit einem Generator 46 für das Tonwahlverfahren und/oder einem Generator 45 für das Pulswahlverfahren in Verbindung. Zweckmäßigerweise weist die Anwahl- und Steuereinrichtung 40 beide Generatoren 45, 46 auf, wodurch keine Einschränkungen des Einsatzbereichs gegeben sind. Über den Generator 46 werden vom Mikroprozessor 41 ein codierter Tonimpuls in Form einer Tonsequenz für das Anwählen des Kommunikationspartners und Tonimpulse zur Fernsteuerung des Anrufbeantworters 30 des Kommunikationspartners 20 (vgl. Fig. 2) erzeugt. Die Anwahl- und Steuereinrichtung 40 weist weiterhin eine Schaltung 44 zur Auswahl des Wählverfahrens auf, die mit dem Telefonnetz 7 verbunden ist und vom Mikroprozessor 41 angesteuert wird. Daneben steht die Schaltung 44 mit dem Aufzeichnungs- und Wiedergabegerät 49 über einen Ein- bzw. Ausgangswiderstand 9 in Verbindung.

Die Schaltung 44 wird vom Mikroprozessor 41 nach dessen Aktivierung angesteuert , die Schaltung 44 gewährleistet hierbei eine Einspeisung der vom Generator 45 bzw. 46 erzeugten Impulse in das Telefonnetz 7.

Zum Erkennen, ob der angewählte Anschluß belegt ist und/oder eine anderweitige Störung des Anschlusses vorliegt, ist eine Tonzeichenerkennung 47 und Rufzeichenerkennung 48 vorgesehen, deren Signale dem Mikroprozessor 41 zugeführt werden.

Es sei hier nochmals darauf hingewiesen, daß es nicht unbedingt notwendig ist, die Anwahl- und Steuereinrichtung 40 für das Puls- sowie Tonwahlverfahren auszustatten. Es genügt beispielsweise auch lediglich eine Ausstattung der Anwahl- und Steuereinrichtung 40 für den Tonwahlbetrieb.

Für den Pulswahlbetrieb muß der Generator 46 dennoch vorgesehen sein, um die Erzeugung der Tonimpulse zur Fernsteuerung des Anrufbeantworters 30 des Kommunikationspartners 20 (vgl. Fig. 2) zu gewährleisten, falls ein solcher Betrieb gewünscht ist. In diesem Fall kann lediglich auf die Tonzeichenerkennung 47 verzichtet werden.

Das System unter Verwendung der Anwahl- und Steuereinrichtung 40 ermöglicht es, gesprochene Texte über das Telefonnetz 7 automatisch zu senden und/oder zu empfangen.

Für ein automatisches und/oder zeitgesteuertes Senden von gesprochenen Texten ist folgender Ablauf denkbar:
Der Mikroprozessor 41 der Anwahl- und Steuereinrichtung 40 wird mit den notwendigen Daten des Kommunikationspartners 20 (Anwahl-Nr., gegebenenfalls Wahlart (Puls- und Tonwahl) programmiert. Dies erfolgt entweder über das Eingabegerät 42 mit Display 50 oder über den Rechner 3. Die Anwahl- und Steuereinrichtung 14 versucht nach Inbetriebnahme, die gegebenenfalls zeitgesteuert sein kann, die Verbindung mit dem Kommunikationspartner 20 über das Telefonnetz 7 herzustellen. Der Verbindungsaufbau wird hierbei über die Rufzeichenerkennung 48 überwacht. Die Rufzeichenerkennung schaltet den Verbindungsaufbau ab, sofern die Leitung besetzt ist oder der Anrufbeantworter 30 des Kommunikationspartners 20 die Verbindung nicht aufbaut, d.h. nicht abhebt. Ein neuer Versuch eines Verbindungsaufbaus wird zu einem späteren Zeitpunkt nochmals gestartet.

Ist die Verbindung hergestellt, wird der Signalton des Anrufbeantworters über die Anwahl- und Steuereinrichtung 40 erfaßt und dient für die Schaltung 44 als Steuerimpuls zur Aktivierung des Aufzeichnungs- und Wiedergabegeräts 49. Die auf dem Aufzeichnungs- und Wiedergabegerät 49 aufgenommenen Texte werden anschließend über das Telefonnetz 7 auf den Anrufbeantworter 30 des Kommunikationspartners 20 übertragen. Nach Beendigung der Übertragung wird die Verbindung von der Anwahl- und Steuereinrichtung 40 unterbrochen. Der Vorteil dieses Verfahrens besteht darin, daß der Anrufbeantworter des Kommunikationspartners 20 beliebiger, handelsüblicher Art sein kann, ohne daß Zusatzgeräte erforderlich sind.

Zusätzlich zu oder anstelle des automatischen und/oder zeitgesteuerten Sendens von gesprochenen Texten ist das System 1 auch in der Lage, gesprochene Texte automatisch und/oder zeitgesteuert zu empfangen. Hierbei ist folgender Ablauf möglich:
Der Mikroprozessor 41 der Anwahl- und Steuereinrichtung 40 wird hierbei ebenfalls mit den notwendigen Daten des Kommunikationspartners 20, d.h. Anwahl-Nr., gegebenenfalls Anwahlart (Puls- oder Tonwahl) sowie hierbei mit den Steuersequenzen (Tonimpulssequenzen zur Fernsteuerung) für den Anrufbeantworter 30 programmiert. Es ist möglich, auch eine zeitliche Abhängigkeit des Empfangs der gesprochenen Texte vorzugeben. Der Verbindungsaufbau erzeugt in der bereits vorstehend beschriebenen Art. Ist die Verbindung hergestellt, so übernimmt die Anwahl- und Steuereinrichtung 40 die Fernsteuerung des Anrufbeantworters unter Verwendung von Steuersequenzen (Tonimpulssequenzen) die durch das Tonwahlverfahren übermittelt werden. Steuerfunktionen sind insbesondere die Aktivierung des Anrufbeantworters 30, die Aktivierung des Rückspul- und Wiedergabevorgangs sowie die Abschaltung des Anrufbeantworters 30 durch entsprechende Tonimpulssequenzen. Ist die Gegenstelle für die Wiedergabe bereit, aktiviert die Anwahl- und Steuereinrichtung 40 das Aufzeichnungs- und Wiedergabegerät 49 für die Aufnahme der gesprochenen Texte. Nach Beendigung der Übertragung wird die Verbindung von der Anwahl- und Steuereinrichtung 40 unterbrochen.

### BEZUGSZEICHENLISTE

- 1: System
- 2: Aufnahmegerät
- 3: Rechner
- 4: Modem
- 5: Schaltung
- 6: Relais
- 7: Telefonnetz
- 8: Speicher
- 9: Zeitschaltuhr
- 10: Ruf- und Signalmaschine
- 15: Tonimpulsgeber
- 20: Bereich des Kommunikationspartners
- 21: PC/Kommunikationspartner
- 22: Datenfernübertragung
- 30: Anrufbeantworter
- 40: Anwahl- und Steuereinrichtung
- 41: Mikroprozessor
- 42: Eingabegerät
- 43: Datenverbindung
- 44: Schaltung zur Aauswahl des Wählverfahrens
- 45: Generator (Pulswahlverfahren)
- 46: Generator (Tonwahlverfahren)
- 47: Tonzeichenerkennung
- 48: Rufzeichenerkennung
- 49: Aufzeichnungs- und Wiedergabegerät
- 50: Anzeiger
- 51: Echtzeituhr
- 52: Verstärker
- 53: Verstärker

## Patentansprüche

1. System zur automatischen Fernabfrage und/oder zum automatischen Senden eines auf Band gesprochenen Textes bzw. zu einem Anrufbeantworter eines ortsentfernten Kommunikationspartners
**dadurch gekennzeichnet,**
daß das System (1) ein Aufnahmegerät (2), einen Rechner (3) mit Speicher (8) sowie ein Modern (4) für das Telefonnetz (7) aufweist, wobei der Anrufbeantworter (30) des Kommunikationspartners zunächst insbesondere automatisch angewählt und anschließend über den Rechner (3) und das Modern (4) unter Verwendung eines codierten Impulses in Ton-Form über das Telefonnetz (7) aktiviert wird, daß ein Rücklaufimpuls des Anrufbeantworters (30) ausgelöst wird und daß der Anrufbeantworter (30) anschließend einen in letzterem abgelegten Text abspielt und das Modern (4) vor Wiedergabe des Textes das Aufnahmegerät (2) des Systems (1) aktiviert, so daß dieses den über die Telefonleitung übermittelten Text aufzeichnen kann.

2. System nach Anspruch 1
**dadurch gekennzeichnet,**
daß das System einen Tonimpulsgeber (15) aufweist, welcher vom Rechner (3) oder Modern (4) angesteuert wird.

3. System nach Anspruch 1 oder 2
**dadurch gekennzeichnet,**
daß der Tonimpulsgeber (15) Bestandteil des Modems (4) ist.

4. System nach den Ansprüchen 1 - 3,
**dadurch gekennzeichnet,**
daß das Modern (4) nach Herstellung der Telefonverbindung sowie nach Aktivierung des Anrufbeantworters (30) die Leitung freischaltet und hierbei eine systemseitige Schaltung (5) aktiviert, die das Abspielgerät (2) in die bereits hergestellte Telefonverbindung schaltet und somit eine Verbindung zwischen Anrufbeantworter (30) und Aufnahmegerät (2) herstellt.

5. System nach den Ansprüchen 1 - 4,
**dadurch gekennzeichnet,**
daß die Schaltung (5) ein von dem Modern (4) anzusteuerndes Relais (6) aufweist, welches in Abhängigkeit der Steuersignale vom Modern (4) das Aufnahmegerät (2) des Systems (1) mit dem Anrufbeantworter (30) des Kommunikationspartners durchschaltet.

6. System nach Anspruch 5,
**dadurch gekennzeichnet,**
daß als Schaltung (5) eine übliche interne, d.h. benutzerbezogene Rufschaltung verwendet wird.

7. System nach den Ansprüchen 1 - 6,
**dadurch gekennzeichnet,**
daß der Rückspulvorgang des Anrufbeantworters (30) durch die Aktivierung des letzteren automatisch ausgelöst wird.

8. System nach den Ansprüchen 1 - 6,
**dadurch gekennzeichnet,**
daß der Rechner (3) über das Modern (4) ein codiertes Signal in Ton-Form an den angerufenen, aktivierten Anrufbeantworter (30) zur Auslösung des Rückspulvorgangs sendet.

9. System nach den Ansprüchen 2 - 8,
**gekennzeichnet durch**
nach Beendigung des Rückspulvorgangs des Anrufbeantworters (30) ein Stop-Impuls vom Anrufbeantworter (30) über das Telefonnetz (7) zum Modern (4) übertragen wird, daß das Modern (4) diesen Stop-Impuls empfängt und das Modem (4) daraufhin die systemseitige Schaltung (5) aktiviert und gleichzeitig die Amtsleitung freischaltet.

10. System nach den Ansprüchen 1 - 9,
**dadurch gekennzeichnet,**
daß als Rechner (3) und Speicher (8) eine speicherprogrammierbare Schaltung verwendet wird.

11. System nach den Ansprüchen 1 - 10,
**dadurch gekennzeichnet,**
daß das System (1) eine Zeitschaltuhr (9) aufweist.

12. System nach den Ansprüchen 1 - 11,
**dadurch gekennzeichnet,**
daß das Modern (4) einen Impuls in Ton-Form als Signal für den Beginn des Abspielvorgangs an den Anrufbeantworter (30) sendet.

13. System nach den Ansprüchen 1- 12,
**dadurch gekennzeichnet,**
daß vom Anrufbeantworter (30) ein ebenfalls in Ton-Form übertragener Abschaltimpuls an das Modern (4) übertragen wird, woraufhin das System abschaltet.

14. System nach den Ansprüchen 1 - 13,
**dadurch gekennzeichnet,**
daß der systemseitige Rechner (3) mit einem Rechner oder PC (21) des Kommunikationspartners über Datenfernübertragungsmittel (22) in Verbindung steht.

15. System nach Anspruch 11,
**dadurch gekennzeichnet,**
daß als Datenfernübertragungsmittel Datex-P oder ISDN vorgesehen sind.

16. System zur automatischen Fernabfrage und/oder zum automatischen Senden eines auf Band gesprochenen Textes von bzw. zu einem Anrufbeantworter eines ortsentfernten Kommunikationspartners über das Telefonnetz insbesondere nach den Ansprüchen 1 - 15,
**dadurch gekennzeichnet,**
daß eine mit dem Telefonnetz (7) verbundene Anwahl- und Steuereinrichtung (40) vorgesehen ist, die die Verbindung nach Vorgabe der Ruf-Nummer des Kommunikationspartners (20) herstellt und entweder eine oder beide der nachstehend beschriebenen Betriebsweisen gewährleistet
i) Fernsteuerung des Anrufbeantworters (30) des Kommunikationspartners (20) ausschließlich über Tonimpulse im Tonwahlverfahren (z.B. Start-, Rückspul-, Wiedergabe- sowie Abschaltimpulse);
ii) Erfassung und Nutzung des Signaltons des Anrufbeantworters (30) des Kommunikationspartners (20), welcher die Aufnahmebereitschaft des Anrufbeantworters (30) kennzeichnet, durch die Auswahl- und Steuereinheit (40) zur Übertragung eines auf Band gesprochenen Textes über das Telefonnetz (7) auf den Anrufbeantworter (30) des Kommunikationspartners (20).

17. System nach Anspruch 16,
**gekennzeichnet durch**
a) einen Mikroprozessor (41), welcher eine Dateneingabemöglichkeit in Form eines Dateneingabegeräts (42) oder in Form einer Datenverbindung (43) zum Rechner aufweist und mit einem Aufzeichnungs- und Wiedergabegerät (49) in Verbindung steht;
b) eine vom Mikroprozessor (41) angesteuerte mit dem Telefonnetz (7) verbundene Schaltung (44) zur Auswahl eines Wahlverfahrens (Ton- und/oder Pulswahl), wobei die Schaltung (44) die mit einem Generator (45) für das Pulswahlverfahren und/oder mit einem Generator (46) für das Tonwahlverfahren in Verbindung steht, der jeweilige Generator (45) bzw. (46) jeweils vom Mikroprozessor (41) angesteuert wird und die jeweiligen zur Fernbedienung des Anrufbeantworters (30) des Kommunikationspartners erforderlichen Tonimpulse vom Generator (46) erzeugt und über die Schaltung (44) in das Telefonnetz (7) eingespeist werden.

18. System nach Anspruch 16 oder 17,
**dadurch gekennzeichnet,**
die Anwahl- und Steuerheinheit (40) mit einer Rufzeichenerkennung (47) ausgestattet ist, die erkennt, ob der angewählte Anschluß belegt oder aus anderen Gründen nicht anwählbar ist und daher nach einer gewissen Zeit die Verbindung automatisch abschaltet.

19. System nach den Ansprüchen 16 bis 18,
**dadurch gekennzeichnet,**
daß in der Anwahl- und Steuereinheit (40) eine Tonzeichenerkennung (48) vorgesehen ist, die dazu dient, eine Erfassung des Signaltons des Anrufbeantworters (30) des Kommunikationspartners, der die Aufnahmebereitschaft signalisiert, zu gewährleisten, woraufhin der Mikroprozessor (41) das Aufnahme- und Wiedergabegerät (49) über die Schaltung (44) in das Telefonnetz (7) schaltet.

20. System nach den Ansprüchen 16 - 19;
**dadurch gekennzeichnet,**
daß der Mikroprozessor (41) über eine Datenschnittstelle sowie Datenverbindung (43) mit dem Rechner (3) verbunden ist, wobei zwischen dem Rechner (3) und dem Rechner (21) des Kommunikationspartners (20) eine Verbindung über DFÜ (Datenfernübertragung) besteht.

21. Verfahren zur automatischen Fernabfrage eines auf Band gesprochenen Textes von dem Band eines Abspielgerätes, d.h. Anrufbeantworter eines ortsentfernten Kommunikationspartners
**gekennzeichnet durch**
**folgende Verfahrensschritte:**
a) der Anrufbeantworter des ortsentfernten Kommunikationspartners wird über das Telefonnetz in herkömmlicher Weise angewählt;
b) der angewählte Anrufbeantworter wird von der Anwahl- und Steuereinrichtung unter Verwendung eines Codes in Ton-Form aktiviert;
c) es wird über einen Tonimpuls der Rückspulvorgang beim angewählten Anrufbeantworter ausgelöst;
d) ein systemseitiges Aufzeichnungs- und Wiedergabegerät wird anschließend in das Telefonnetz eingeschaltet, so daß eine Telefonverbindung zwischen Aufzeichnungs- und Wiedergabegerät sowie Anrufbeantworter besteht;
e) das Aufzeichnungs- und Wiedergabegerät zeichnet den im Anrufbeantworter abgespielten Text auf;
f) die Anwahl- und Steuereinrichtung des Systems schaltet das System nach Aufzeichnung über einen Tonimpuls ab:

22. Verfahren zum automatischen Senden eines auf Band gesprochenen Textes von einem systemseitigen Aufzeichnungs- und Wiedergabegerät auf ein Band eines Anrufbeantworters eines ortsentfernten Kommunikationspartners
**gekennzeichnet durch**
**folgende Verfahrensschritte:**
a) der Anrufbeantworter des ortsentfernten Kommunikationspartners wird über das Telefonnetz in herkömmlicher Weise angewählt;
b) der angewählte Anrufbeantworter wird von der Anwahl- und Steuereinrichtung unter Verwendung eines Codes in Ton-Form aktiviert;
c) der Signalton des Anrufbeantworters wird über die Anwahl- und Steuereinrichtung erfaßt und
d) das systemseitige Aufzeichnungs- und Wiedergabegerät wird anschließend in das Telefonnetz eingeschaltet und der darauf aufgezeichnete gesprochene Text übertragen.
